# EUROPEAN PATENT SPECIFICATION

(11) **EP 3 800 074 B1**
(45) Date of publication and mention of the grant of the patent: **07.09.2022**
(21) Application number: 20199554.5
(22) Date of filing: 01.10.2020
(51) Int. Cl.: B60C 25/138, B60C 25/14, B60C 25/05

(54) **APPARATUS FOR MOUNTING A TYRE ON A RIM**
VORRICHTUNG ZUR MONTAGE EINES REIFENS AUF EINER FELGE
APPAREIL DE MONTAGE D'UN PNEU SUR UNE JANTE

(30) Priority: 02.10.2019 IT 201900017741
(43) Date of publication of application: 07.04.2021
(73) Proprietor: NEXION S.p.A., 42015 Correggio (RE) (IT)
(72) Inventor: CORGHI, Giulio, 42015 CORREGGIO (Reggio Emilia) (IT)
(74) Representative: Conti, Marco

(56) References cited:
- EP-A1- 0 408 921
- EP-A1- 3 524 448
- CN-B- 106 427 424
- US-A- 5 878 801

## Description

This invention relates to an apparatus for mounting a tyre on a respective rim of a vehicle wheel.

Once a tyre has been properly mounted with one of these mounting apparatuses, the tyre must be inflated.

When inflating certain types of tyres - for example, but not only, lorry and truck tyres - it is established practice for inflation operations to be carried out in two steps, performed in sequence or simultaneously. The first step of inflating, also called bead seating, is characterized by very high flow rates. The purpose of this is to bed the tyre bead in the respective seats in the rim flange. Next (or simultaneously), a specific inflator forming part the machine and working at a lower flow rate is used to complete inflation to the desired tyre pressure. Bead seating is carried out using a (dedicated) device, known as bead seating device.

The bead seater comprises a duct for conveying an air flow and an injection nozzle, which is interposed between the rim flange and the tyre bead to inject an air flow. In other solutions, the bead seater is interposed between the rim flange and the tyre bead at positions spaced along the circumference of the rim.

In some solutions known in the prior art, the bead seater is a self-contained unit, separate from the mounting apparatus. Solutions of this kind are described, for example, in documents US9649897 and US5570733. In these solutions, the bead seater is operated manually by the user who holds it during the bead seating operation.

In other solutions, described for example in documents US4811774 and US4809759, a rigid coil connected to a frame of the apparatus, is placed above the rim. Inside it, the coil houses an inflation pipe which is coupled to the inflation valve of the rim. This solution thus describes an attempt to stiffen an inflation system that is not suitable for carrying out the bead seating operation.

In yet other solutions, described for example in document WO2014070741, a nozzle is provided which is fixed to the frame and oriented towards the rim mounted on a wheel holder chuck of the apparatus. The nozzle emits a blast of air in the shape of a cone directed at the rim and the tyre mounted thereon. This solution causes a considerable amount of air loss which translates as a reduction in efficiency.

In document US6761061B2, filed by this Applicant, the apparatus comprises an arm that is articulated to the frame and positioned above the rim. The bead seater is provided at one end of the articulated arm and comprises a plurality of nozzles spaced along the circumference of the rim and connected to each other by two circular rods. The two circular rods are connected to the articulated arm by a linkage system. Each circular rod comprises a respective handle. During the step of seating the bead, the operator grips the bead seater and positions it above the rim. Next, the distance between the two circular rods is adjusted by operating manually on the linkage system in order to adapt the bead seater to the size of the wheel. Lastly, during the step of inflating, the operator holds the two circular rods firmly to prevent the air pressure from moving the bead seater out of the correct position.

This solution, too, therefore requires manual operation, which not only reduces machine safety but also the tyre mounting speed because the operator has to hold the bead seater for the entire duration of the bead seating operation.

Other examples of an apparatus for mounting a tyre are disclosed in the following patent documents: EP3524448A1, EP0408921A1, US5878801A and CN1 06427424, wherein EP3524448A1 is showing the features of the preamble of claim 1.

This invention has for an aim to provide an apparatus and a method for mounting a tyre on a respective rim to overcome the above mentioned drawbacks of the prior art.

This aim is fully achieved by the apparatus and method of this invention as characterized in the appended claims.

According to an aspect of it, this invention provides an apparatus for mounting a tyre on a respective vehicle wheel rim.

It should be noted that the apparatus of this invention is intended, in particular (but not exclusively) to be applied to tyres of the tubeless type. The term "tubeless tyre" is used to denote a tyre in which the inflation air is held within only by the rubber structure of the tyre (in conjunction with the rim) and which is not provided with a conventional inner tube.

The apparatus comprises a frame. The apparatus comprises a chuck, connected to the frame. The chuck rotates about an axis of rotation and is connectable to the wheel to entrain it in rotation.

The apparatus comprises a working tool. The working tool is movable relative to the frame towards the wheel to come into contact with the tyre. The working tool is configured to press the tyre to insert a tyre bead between the two edges of a flange of the rim.

The apparatus comprises a bead seating device. The bead seating device is configured to generate an air flow to be injected between a flange of the rim and a bead of the tyre. This allows mounting the tyre on the respective rim by bedding the tyre beads in the respective seats formed on the rim. The bead seating device is movable relative to the chuck along a transverse orientation, perpendicular to the axis of rotation (the transverse orientation comprises both a radial orientation and a tangential orientation, relative to a profile of the tyre).

With regard to the bead seating operation, it should be noted that the tyre bead moves from the groove, or from a central zone of the rim, towards the edge.

It should be noted that mounting and inflation operations may give rise to problems connected with the formation of cracks between the bead and the rim flange; obviously, it is desirable to prevent or eliminate such cracks. In this context, the bead seater according to this disclosure constitutes a valid aid for preventing or eliminating such cracks; this also makes it possible to avoid having to use other auxiliary tools specifically for solving the problems connected with the cracks.

It should be noted that in an embodiment, the mutual displacement is caused by the bead seating device moving relative to the frame, whilst the chuck is fixed relative to the frame. In other embodiments, the bead seating device is fixed relative to the frame and the chuck is movable relative to the frame to move towards or away from the bead seating device along the transverse orientation. Lastly, in a further embodiment, the mutual displacement between the chuck and the bead seating device is caused by the bead seating device moving along the transverse orientation relative to the frame and the chuck moving along the transverse orientation relative to the frame.

The bead seating device is movable relative to the chuck along the transverse orientation between a rest position, in which the bead seating device is spaced from the rim, and a working position, in which the bead seating device (or at least part of the bead seating device) is interposed between the flange of the rim and the bead of the tyre.

In an embodiment, the bead seating device is movable along an orientation parallel to the axis of rotation. Preferably, the bead seating device moves along the orientation parallel to the axis of rotation translationally until it is positioned at a level intermediate between that of the rim flange and that of the tyre bead. In an embodiment, the translational movement along the orientation parallel to the axis of rotation is performed by means of an actuator.

In an embodiment, the bead seating device includes a rigid element. The bead seating device includes an injection nozzle, connected to the rigid element. The injection nozzle is configured to be interposed between the rim flange and the tyre bead when the bead seating device is at the working position. The bead seating device includes a duct, connected to the injection nozzle to feed the air flow to it.

In an embodiment, when the bead seating device is at the working position, it is operatively connected rigidly to the frame. The bead seating device is configured to remain independently and fixedly stationary at the working position, even when subjected to a force generated by the air flow. In other words, during bead seating - that is, during air injection -, the apparatus does not require the bead seating device to be held manually because the bead seating device is rigidly connected to the frame and cannot therefore be moved from its working position, even when subjected to a reactive force due to the injection of the air flow. That means that high air flow rates can safely be used. In other words, the bead seating device is stable in its working position, when subjected to a reactive force due to the injection of the air flow.

In an embodiment, the rigid element of the bead seating device is slidable relative to the frame. The apparatus comprises a locking device. At the working position, the locking device is configured to make the rigid element of the bead seating device become one with the frame.

In other words, the rigid element is movable relative to the frame to reach the working position, after which it is locked to the frame by the locking device which prevents any possibility of its moving.

It should be noted that by locking device is meant any solution which prevents the movement of the rigid element. In this context, therefore, the locking device may be either a manual solution, in which a mechanical element is interposed between the rigid element and the slideway in which it moves, or an automatic solution, in which an actuator is driven to prevent movements when the bead seating device is at the working position.

In an embodiment, the apparatus comprises a supporting element. The supporting element is movable relative to the frame along an axial orientation, parallel to the axis of rotation. The rigid element of the bead seating device is connected to the supporting element to move translationally along the axial orientation. That way, the position of the bead seating device can be adapted to the height of the sidewall of the tyre mounted on the chuck.

In an embodiment, the injection nozzle comprises an abutment element.

The abutment element is configured to come into abutment against the wheel rim when the bead seating device is at the working position. The abutment element is advantageous for stabilizing the bead seating device and acts as a reference to be certain of the position of the injection nozzle. In effect, in some embodiments, once one coordinate of the bead seating device has been defined (along the axial orientation), the working position of the bead seating device can be defined by moving the abutment element into contact with the rim.

In an embodiment, the rigid element is elongate along the transverse orientation. In an embodiment, the injection nozzle is oriented along an injection plane that is inclined relative to the transverse orientation.

In an example embodiment, the injection nozzle has walls that are convergent in an orientation of injection of the air flow and in a direction of injection of the air flow. This allows increasing the speed of the air flow from the injection nozzle and, thanks to the Venturi effect, drawing more air from some openings of the nozzle and to be directed at the rim.

In an embodiment, the injection nozzle comprises a first opening and a second opening. That way, the injection nozzle is used to produce a first air flow, directed along a first orientation, and a second air flow, directed along a second orientation.

Preferably, the first and second orientations are contained in the injection plane. The first and second orientations are inclined relative to each other. In an embodiment, the first and second orientations are both tangent to a circle that is concentric with the rim. In an embodiment, the first and second orientations have a component along orientations tangent to a circle that is concentric with the rim and a component along an orientation parallel to the axis of rotation. The first and second tangent orientations are divergent along the transverse orientation in the direction of injection. That way, when it arrives, the air flow has the same flow rate and speed properties in the different zones of a space between the tyre and the rim (or in the inner tube in the case of non-tubeless tyres), thus increasing the uniformity of the bead seating operation.

In an embodiment, the rigid element moves translationally along the transverse orientation relative to the frame. In other solutions, the rigid element moves rotationally relative to the frame between the working position and the rest position. In yet other solutions, translation and rotation are combined to obtain the movement between the working position and the rest position.

In an embodiment, the rigid element is oriented radially along an axis passing through the axis of rotation.

In an embodiment, the apparatus comprises a slideway. The slideway is connected to the frame, preferably to the supporting element, to move along the axial orientation.

The slideway is coupled to the rigid element of the bead seating device to allow sliding along the transverse orientation. The slideway is associated with the locking device, preferably in the embodiment in which it is operated manually.

In a variant of this invention, the apparatus comprises an actuator (at least one). The actuator is connected to the bead seating device to move between the rest position and the working position.

In an embodiment, the apparatus comprises a control unit, configured to perform one or more of the following activities:
- receiving configuration data correlated with the diameter of the rim (or more generally, with geometric parameters of the wheel);
- generating drive signals representing the working position of the bead seating device in response to the configuration data;
- sending the drive signals to the actuator to instruct it to move the bead seating device between the rest position and the working position.

In an embodiment, the configuration data correlated with the rim also comprise the size of the rim along the axial orientation (parallel to the axis of rotation) and/or the position of the rim flange along the axial orientation relative to the supporting plane of the rim relative to the chuck.

In an embodiment, the apparatus comprises an inflator, including an inflation duct. The inflator is connectable to an inflation valve with which the wheel rim is provided. The inflator allows inflating the tyre mounted on the rim. More specifically, after a first step of inflating performed by the bead seating device, the inflator allows inflation of the wheel to be completed.

According to an aspect of it, this invention provides a method for mounting a tyre on a respective vehicle wheel rim.

The method comprises a step of providing a mounting apparatus including a frame, a chuck connected to the frame, a working tool and a bead seating device.

The method comprises a step of positioning the tyre on the rim fixed to the chuck. The method comprises a step of moving the working tool into contact with the tyre. The method comprises a step of rotating the chuck about the axis of rotation of the wheel in order to couple the tyre to the rim. The method comprises a step of moving the bead seating device and the chuck relative to each other, preferably along a transverse orientation perpendicular to the axis of rotation, between a rest position, in which the bead seating device is spaced from the rim, and a working position, in which the bead seating device is interposed between the flange of the rim and the bead of the tyre. The step of moving the bead seating device and the chuck relative to each other can be performed according to three different embodiments: moving the bead seating device relative to the frame while the chuck remains stationary; moving the chuck relative to the frame while the bead seating device remains stationary; moving both the chuck and the bead seating device relative to the frame in combination. The method comprises a step of seating the tyre bead in the respective rim by injecting an air flow between a flange of the rim and a bead of the tyre.

In an embodiment, the method (the step of seating the bead) comprises a step of constraining in which, during the step of seating the bead, a rigid element of the bead seating device is constrained to the frame. In the step of constraining, the rigid element receives a constraint force from the frame to oppose the force generated by the air flow so as to keep the bead seating device stationary at the working position during the step of seating the bead.

In an embodiment, the step of constraining is (comprises) a step of locking. In the step of locking, a locking element rigidly constrains the rigid element to the frame with the bead seating device at the working position so as to keep an injection nozzle of the bead seating device in a stationary position relative to the frame at the working position.

In an embodiment, the method comprises a step of actuating, in which an actuator moves the bead seating device between the rest position and the working position along the transverse orientation.

The method comprises a step of moving the bead seating device along an axial orientation parallel to the axis of rotation. In an embodiment, the step of moving the bead seating device along an axial orientation is performed by an actuator.

In the step of seating the bead, an injection nozzle oriented along an injection plane injects the air flow. In the step of seating the bead, a first opening of the injection nozzle injects a first air flow along a first orientation. In an embodiment of the method, in the step of seating the bead, a second opening of the injection nozzle injects a second air flow along a second orientation. The second orientation is inclined relative to the first orientation. The first and second orientations are contained in the injection plane.

The method comprises a step of inflating. In the step of inflating, an inflation pipe injects air through an inflation valve of the rim so as to inflate the tyre mounted on the respective rim.

These and other features will become more apparent from the following detailed description of a preferred, non-limiting embodiment, illustrated by way of example in the accompanying drawings, in which:

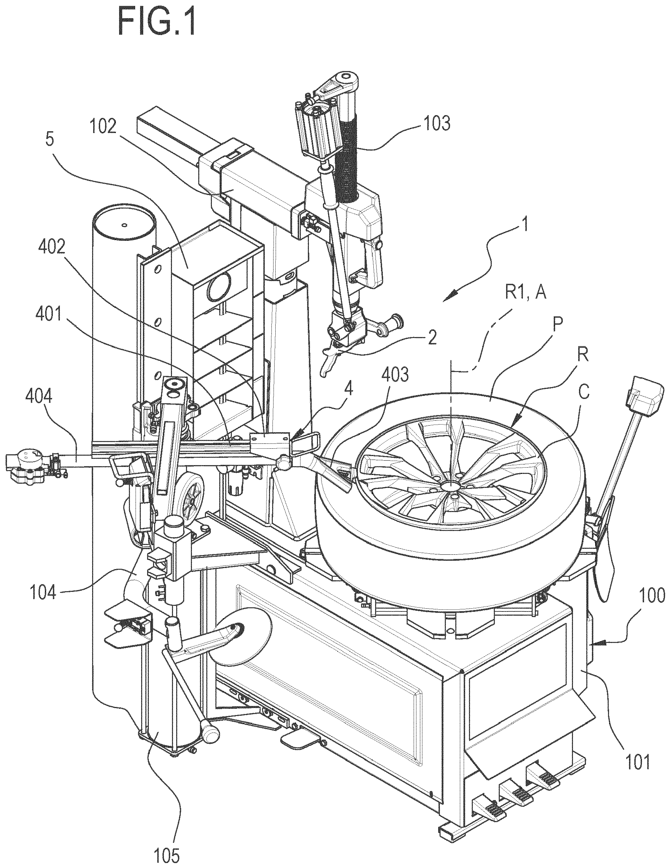

- Figure 1 shows a perspective view of an apparatus for mounting a tyre on a respective rim of a vehicle wheel;

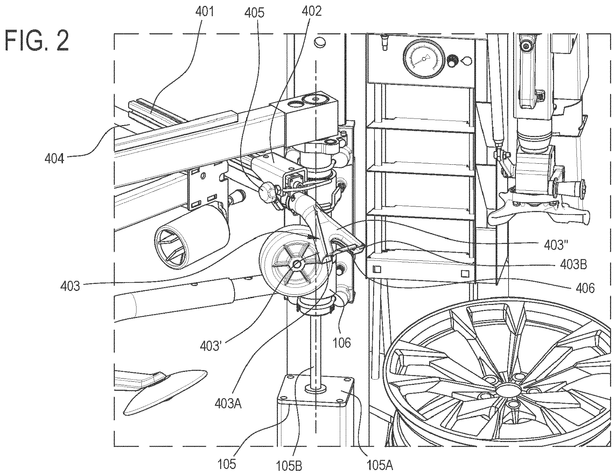

- Figure 2 shows a detail of a bead seating device of the apparatus of Figure 1;

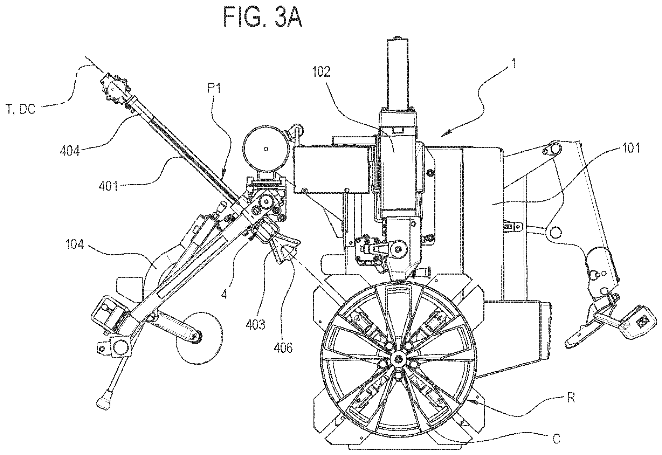

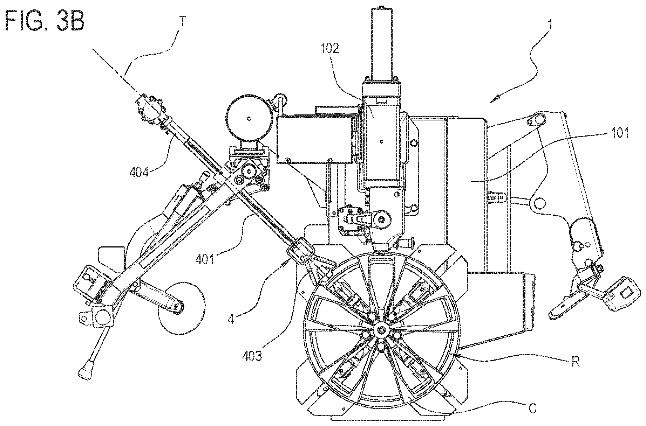

- Figures 3A and 3B show the bead seating device of Figure 2 at a rest position and a working position, respectively;

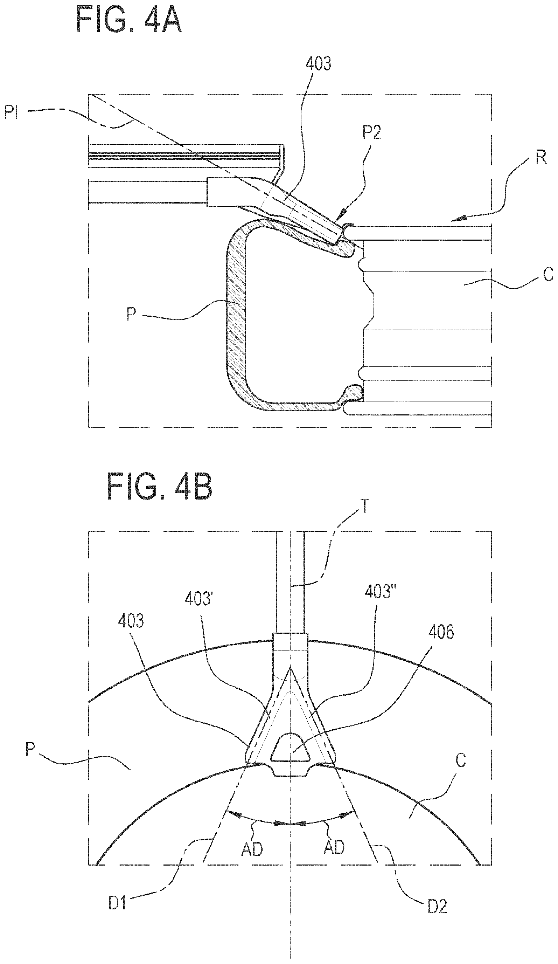

- Figure 4A schematically illustrates a detail of an embodiment of an injection nozzle of the bead seating device of Figure 2;
- Figure 4B shows a schematic plan view of a detail of the injection nozzle of Figure 4A.

With reference to the accompanying drawings, the numeral 1 denotes an apparatus for mounting a tyre P on a respective rim C of a vehicle wheel R.

The apparatus 1 comprises a frame 100. The frame 100 comprises a base unit 101, resting on the floor. The frame 100 comprises a column 102 which rises from the base unit 101 along an axial orientation A.

In an embodiment, the frame 100 comprises a first operating arm 103, connected to the column 102. The first operating arm 103 extends from the column 102 parallel to the axial orientation A.

In an embodiment, the frame comprises a second operating arm 104. The first operating arm 103 and the second operating arm 104 are configured to hold tools adapted to mount the tyre P on the respective rim C. In an embodiment, the apparatus 1 comprises only the first operating arm 103, for all the mounting tools, both those for seating the bead and those to facilitate mounting operations.

The apparatus comprises a working tool 2 which is movable relative to the frame 100 (relative to the column 102) towards the wheel R to come into contact with the tyre P. The working tool 2 is movable along the axial orientation A (towards and away from the wheel R) relative to the first arm 103 and/or along a transverse orientation T perpendicular to the axial orientation A, relative to the column 102 (or more generally speaking, relative to the frame 100).

The apparatus comprises a chuck 3, connected to the base unit 101 of the frame 100. The chuck 3 rotates relative to the frame 100 about an axis of rotation R1, parallel to the axial orientation A.

In an embodiment, the chuck 3 is movable relative to the frame along the transverse orientation T. In other possible solutions of this invention, the chuck 3 is movable relative to the frame 100 along the axial orientation A. According to an aspect of this invention, the frame comprises an axial actuator 105. In an embodiment, the axial actuator 105 is connected to the base unit 101 and rises along the axial orientation A.

In other embodiments, the axial actuator 105 is connected to (built into) the column 102.

In an embodiment, the second operating arm 104 is connected to the axial actuator and extends from it perpendicularly to the axial orientation. In other embodiments, the second operating arm 104 extends from the column 102 parallel to the axial orientation A.

The apparatus 1 (the frame 100) comprises a supporting element 106. The supporting element is connected to the axial actuator 105. In an embodiment, the supporting element 106 is connected to the column 102 and is slidable relative to the column 102 along the axial orientation A.

In an embodiment, the axial actuator 105 comprises a cylinder 105A and a piston 105B. The cylinder 105A is fixed to the base unit 101 of the frame 100. The piston 105B is movable relative to the frame along the axial orientation A. The supporting element 106 is connected to the piston 105B (to a stem of the piston 105B) to move along the axial orientation A.

In an embodiment, the apparatus 1 comprises a bead seating device 4. The bead seating device 4 is configured to seat the tyre P on the rim C of the wheel R. Bead seating is a preliminary operation for inflating the wheel R (with specific inflation parameters such as, for example, high flow rates), whereby the beads of the tyre P are bedded in the respective seats of the rim C before inflation of the wheel R is completed. The bead seating device 4 is therefore configured to generate an air flow to be injected between a flange of the rim and a bead of the tyre.

The bead seating device 4 includes a rigid element 401. The rigid element 401 is, for example, a rigid rod that extends along the transverse orientation T. The bead seating device 4 includes a slideway 402. The slideway 402 is connected to the supporting element 106. The rigid element 401 is coupled to the slideway 402. The rigid element 401 is movable relative to the slideway 402 along the transverse orientation T. The rigid element 401 is movable inside the slideway 402 along the transverse orientation T.

According to an aspect of this invention, the bead seating device can be actuated manually or automatically by a transverse actuator.

In the case of manual actuation, the slideway 402 is a hollow box configured to guide the rigid element 401 during the sliding movement imparted to it by an operator. In the case of automatic actuation, the rigid element 401 is, for example, a stem of a piston of the transverse actuator (for example, a pneumatic reciprocating actuator) and the slideway 402 is defined by a cylinder of the transverse actuator. In this embodiment, the transverse actuator is connected to the supporting element 106 which entrains it along the axial orientation A. This embodiment is purely exemplary and automatic actuation might involve the use of an electric actuator.

It should also be noted that in a further embodiment, the bead seating device 4 might be actuated by a hybrid system. For example, the bead seating device 4 might be moved by the transverse actuator in an initial step of approaching, after which its position would be adjusted manually. The bead seating device 4 is movable relative to the frame 100 (relative to the slideway 402) between a rest position P1, in which the bead seating device 4 is spaced from the rim C, and a working position P2, in which the bead seating device 4 is interposed between the flange of the rim C and the bead of the tyre P.

The bead seating device comprises an injection nozzle 403. The bead seating device comprises a duct 404. The duct 404 is configured to convey the air flow to the injection nozzle 403.

The duct 404 is, for example, a flexible hose connected to a compressor which supplies the air flow to be injected.

The injection nozzle 403 is configured to direct the air flow. The injection nozzle 403 is connected to the rigid element 401 to move with it along the transverse orientation T. The injection nozzle 403 is connected to the duct 404 to receive the air flow.

In an embodiment, the bead seating device 4 comprises a locking element 405. The locking element 405 is configured to lock (constrain) the rigid element 401 to the frame 100 (to the slideway 402) when the bead seating device 4 is at the working position P2. The locking element 405 is configured to inhibit the rigid element 401 from sliding in the slideway 402 when the bead seating device 4 is at the working position P2.

In an embodiment, the locking element 405 may be integrated in the transverse actuator to lock in place a movable element of the transverse actuator - for example, a piston in the case of a reciprocating actuator. In other embodiments, the locking element 405 is a threaded member which is screwed transversely (in the direction of movement of the rigid element 401 in the slideway 402) into a respective threaded socket of the slideway 402.

Therefore, the further the tip of the threaded member is screwed in, the greater the pressure it exerts on the rigid element 401. This pressure increases friction between the threaded member and the rigid element 401 until the value of that friction is high enough to counteract the forces caused by the injection of the air flow.

In an embodiment, the injection nozzle 403 is included in an injection plane PI. The injection plane is inclined to the transverse orientation T, that is to say, inclined to the predominant orientation of the rigid element 401.

The injection nozzle 403 comprises a first portion 403' having a single flow section. The first portion 403' is connected to the duct 404 to receive the air flow along a conveying orientation DC, preferably included in the injection plane PI. The injection nozzle 403 comprises a second portion 403". The second portion 403" comprises a first air flow section and a second air flow section which branch out from the single flow section of the first portion 403'.

More specifically, the injection nozzle 403 comprises a first opening 403A and/or a second opening 403B. The first opening 403A is associated with the first flow section to define a first air flow injection orientation D1. The second opening 403B is associated with the second flow section to define a second air flow injection orientation D2.

The first injection orientation D1 and/or the second injection orientation D2 are included in the inclination plane PI (that is, they are inclined to the transverse orientation T). The first injection orientation D1 and/or the second injection orientation D2 are inclined to each other.

The first injection orientation D1 and/or the second injection orientation D2 are convergent, in the inclination plane, along the conveying orientation DC in a direction oriented from the second portion 403" to the first portion 403' of the injection nozzle 403.

Moreover, in a further embodiment, the second portion of the injection nozzle 403 might be divided into a plurality of flow sections, each having a respective opening and a respective injection orientation.

It should be noted that the nozzle might, in one embodiment, comprise only the first portion 403', preferably with a constant cross section size, extending to the opening of the nozzle.

In an embodiment, the transverse orientation T is a radial orientation passing through the axis of rotation R1 of the chuck 3. In such an embodiment, the conveying orientation DC also passes through the axis of rotation R1, but not perpendicularly thereto. In this embodiment, therefore, the first injection orientation D1 and the second injection orientation D2 are inclined at the same angle of deviation AD relative to the axis of rotation R1, thus improving inflation uniformity and bead seating efficiency. In other words, the plane which includes the rigid element 401 and the axis of rotation R1 of the chuck 3 define a bisector of the angle between the first injection orientation D1 and the second injection orientation D2.

In other embodiments, the angle of deviation of the first injection orientation D1 and the angle of deviation of the second injection orientation D2 are different but are located on opposite sides of the plane which includes the rigid element 401 and the axis of rotation R1 of the chuck 3.

The bead seating device 4 includes an abutment element 406. The abutment element 406 is configured to come into abutment against the wheel rim C when the bead seating device 4 is at the working position P2. The abutment element 406 preferably has a curved profile so it can surmount the rim C. In an embodiment, the abutment element 406 is perpendicular to the injection plane PI and rises therefrom to come into abutment against the rim C when the injection nozzle 403 is disposed between the bead of the tyre P and the rim C. In an embodiment, the abutment element 406 is disposed at the injection nozzle 403, preferably interposed between the first opening 403A and the second opening 403B. The abutment element 406 is connected to a top surface of the injection nozzle 403, facing the flange of the rim C.

According to an aspect of this invention, the apparatus 1 comprises an inflator 5. The inflator 5 is configured to inflate the tyre P mounted on the rim C. More specifically, the inflator 5 is configured to complete inflation of the wheel R and thus comes into operation after the tyre P has been seated on the rim C.

The inflator 5 comprises one or more of the following features:
- an inflation duct, connectable to a valve of the rim C;
- optionally, a compressor, configured to generate an air flow to reach a desired inflation pressure;
- a pressure sensor, configured to detect the pressure inside the wheel;
- an inflation connector, located at one end of the inflation duct to connect to the valve of the rim;
- a pressure limiter, configured to interrupt air injection when the tyre pressure exceeds a threshold value.

In an embodiment, preferably in which the apparatus 1 is configured to automatically actuate the bead seating device 4 through the transverse actuator, the apparatus 1 comprises a control unit 6. The apparatus 1 comprises a user interface, configured to allow entering configuration data, preferably representing a diameter of the rim or, more generally speaking, geometrical characteristics of the wheel being mounted. In other embodiments, the configuration data are determined automatically through one or more sensors which are configured to detect the geometrical characteristics of the wheel being mounted.

The control unit 6 is configured to receive the configuration data. The control unit 6 is configured to generate drive signals in response to the configuration data. In an embodiment, the drive signals represent one or more of the following entities: the rest position P1 of the bead seating device 4, the working position P2 of the bead seating device 4, the maximum torque (force) deliverable by the transverse actuator, the axial position of the supporting element 106, the position of the working tool relative to the chuck 3. In an embodiment, the control unit is configured to receive control signals, for example from the transverse actuator. In an embodiment, the drive signals represent one or more of the following entities: the torque (force) delivered by the transverse actuator and/or by the axial actuator, the position of the bead seating device 4 relative to the chuck 3, the position of the chuck 3 relative to the frame 100.

In an embodiment, the control unit 6 is configured to determine the drive signals as a function of the control signals and of the configuration data.

In an embodiment, the control unit is programmed to disable the transverse actuator when the values of the delivered torque (force) exceed a limit torque (force) value (that is to say, the control unit includes a torque and/or force limiter). This prevents damage to the rim C if the working position P2 is calculated incorrectly and if the bead seating device 4 comes into contact with the rim C before reaching the working position P2. In such a case, the resistance of the rim C increases the torque (force) delivered by the transverse actuator which, when the maximum torque (force) deliverable is exceeded, is disabled by a torque limiter of the control unit 6. This function may also be used for positioning. In effect, in an embodiment, the control unit 6 is configured to determine an axial position of the bead seating device 4 in response to the configuration data. The control unit 6 is also configured to interrupt the transverse movement of the bead seating device 4 when it detects a minimum resistance, indicating that it has come into abutment against the rim C.

According to an aspect of it, this invention provides a method for mounting a tyre on a respective vehicle wheel rim.

The method comprises a step of providing a mounting apparatus 1 including a frame 100, a chuck 3 connected to the frame 100, a working tool 2 and a bead seating device 4.

The method comprises a step of positioning the tyre P on the rim C fixed to the chuck 3. In this step, the tyre P is only partly inserted into the correct seat of the rim C. More specifically, only one bead of the tyre P is interposed between the edges of the flange of the rim C.

In an embodiment, the method comprises a step of moving the working tool 2 into contact with the tyre P.

The method comprises a step of rotating the chuck 3 about the axis of rotation R1 of the wheel R in order to couple the tyre P to the rim C. Through the step of moving the working tool 2 and the step of rotating the wheel R, the other bead of the tyre is also interposed between the edges of the flange of the rim C.

The method comprises a step of moving the bead seating device 4 relative to the chuck 3. The step of moving is performed along a transverse orientation T, perpendicular to the axis of rotation R1, between a rest position P1, in which the bead seating device 4 is spaced from the rim C, and a working position P2, in which the bead seating device 4 is interposed between the flange of the rim C and the bead of the tyre P. The method comprises a step of seating the bead of the tyre P in the respective rim C by a step of the bead seating device 4 injecting an air flow between a flange of the rim C and a bead of the tyre P.

In the step of seating the bead, a rigid element 401 of the bead seating device 4 is constrained to the frame 100. The rigid element 401 receives a constraint force from the frame 100 to oppose the force generated by the air flow. This allows keeping the bead seating device 4 stationary at the working position P2 during the step of seating the bead.

The method comprises a step of moving a first operating arm 103 along an axial orientation A, parallel to the axis of rotation R1. The operating arm supports the working tool 2 and moves it along the axial orientation A.

In an embodiment, the method comprises a step of moving the chuck 3 along an orientation that is perpendicular to the axis of rotation R1 of the chuck 3. In addition, or alternatively, the chuck 3 is moved along the axial orientation A.

The method comprises a step of axially actuating. In the step of axially actuating, an axial actuator 105, connected to the base unit 101 and extending along the axial orientation A, moves along the axial orientation A a supporting element 106 which supports the bead seating device 4. Thus, an axial movement of the supporting element 106 also moves the bead seating device 4 along the axial orientation A.

The method comprises a step of sliding a rigid element 401 of the bead seating device 4 along the transverse orientation T in a slideway 402 of the bead seating device 4.

In an embodiment, the method comprises a step of manually actuating the bead seating device 4.

In the step of manually actuating, an operator moves the rigid element 401 relative to the slideway 402. The step of manually actuating also comprises a step of locking and/or unlocking. In the step of locking and/or unlocking, a locking element 405 inhibits the movement of the rigid element 401 relative to the slideway 402. For example, a threaded part inserted into the slideway 402 is screwed tight on the rigid element 401. Tightening the rigid element 401 this way produces friction which makes the rigid element 401 become one with the frame 100 (with the slideway 402).

In addition, or alternatively, the method comprises a step of automatically actuating the bead seating device 4. In the step of automatically actuating, a transverse operator, preferably connected to the supporting element 106, moves the rigid element 401 relative to the slideway 402.

In the step of injecting, an injection nozzle 403 of the bead seating device 4 directs the air flow. In the step of injecting, a duct 404, connected to the injection nozzle 403, conveys the air flow to the injection nozzle 403. In the step of moving the rigid element 401, the injection nozzle 403, which is connected to the rigid element 401, is entrained in the movement along the transverse orientation T.

In the step of injecting, the injection nozzle 403 directs the air flow along an injection plane PI that is inclined to the transverse orientation T, that is to say, inclined to the predominant orientation of the rigid element 401.

In an embodiment in which the injection nozzle comprises a first opening 403A and/or a second opening 403B through which the air flow is injected, the method comprises a first step of injecting and a second step of injecting. In the first step of injecting, the air flow is injected through the first opening 403A along a first injection orientation D1. In the second step of injecting, the air flow is injected through the second opening 403B along a second injection orientation D2.

In the step of injecting, the first injection orientation D1 and/or the second injection orientation D2 remain included in the inclination plane PI (that is, they are inclined to the transverse orientation T) and are inclined to each other. In the step of injecting, the first injection orientation D1 and/or the second injection orientation D2 are symmetrical about a plane which includes the rigid element 401 and the axis of rotation R1 of the chuck 3 (that is to say, the plane defines a bisector of the angle between the first injection orientation D1 and the second injection orientation D2).

In an embodiment, the method comprises a step of abutting. In the step of abutting, an abutment element 406 which is preferably perpendicular to the injection plane PI comes into abutment against the rim C when the bead seating device 4 is at the working position P2.

According to an aspect of this invention, the method comprises a step of inflating. In the step of inflating, an inflator 5 inflates the tyre P mounted on the rim C. More specifically, the inflator 5 completes inflation of the wheel R and thus comes into operation after the tyre P has been seated on the rim C. In the step of inflating, an inflation duct is connected to a valve of the rim C and to a compressor (or, alternatively, to a compressed air line which supplies the air flow through a compressor outside the apparatus), which generates an air flow at an inflation pressure. Also in the step of inflating, a pressure sensor, detects the pressure inside the wheel;
In an embodiment, preferably with the bead seating device 4 actuated automatically, the method comprises a step of controlling.

In the step of controlling, a control unit 6 receives configuration data, preferably representing a diameter of the rim, from a user interface.

The control unit 6 generates drive signals in response to the configuration data. In an embodiment, the control unit receives, for example from the transverse actuator, control signals representing one or more of the following entities: the torque (force) delivered by the transverse actuator, the position of the bead seating device 4 relative to the chuck 3, the position of the chuck 3 relative to the frame 100.

In an embodiment, the control unit 6 determines the drive signals as a function of the control signals and/or of the configuration data.

In an embodiment, the step of controlling comprises a step of limiting the deliverable torque. In the step of limiting the torque, the control unit disables the transverse actuator when the values of the torque (force) delivered exceed a limit torque (force) value (that is to say, the control unit includes a torque and/or force limiter). In an embodiment, the step of moving the bead seating device comprises a step of positioning by feedback. In the step of positioning by feedback, the control unit 6 determines an axial position of the bead seating device 4 in response to the configuration data. After that, the control unit 6 interrupts the transverse movement of the bead seating device 4 when it detects a minimum resistance, indicating that it has come into abutment against the rim C, hence that the bead seating device 4 has reached the working position P2.

## Claims

1. An apparatus (1) for mounting a tyre (P) on a respective rim (C) of a wheel (R) of a vehicle, comprising:
- a frame (100);
- a chuck (3), connected to the frame (100) to rotate about an axis of rotation (R1) and connectable to the wheel (R) to entrain it in rotation;
- a working tool (2) which is movable relative to the frame (100) towards the wheel (R) to come into contact with the tyre (P);
- a bead seating device (4) configured to generate an air flow to be injected between a flange of the rim (C) and a bead of the tyre (P) in order to seat the tyre (P) on the rim (C) of the wheel (R), the bead seating device (4) being movable relative to the chuck along a transverse orientation (T), perpendicular to the axis of rotation (R1), between a rest position (P1), in which the bead seating device (4) is spaced from the rim (C), and a working position (P2), in which the bead seating device (4) is interposed between the flange of the rim (C) and the bead of the tyre (P), the bead seating device (4) including: a rigid element (401), an injection nozzle (403) connected to the rigid element (401) and configured to be interposed between the flange of the rim (C) and the bead of the tyre (P) when the bead seating device (4) is at the working position (P2); and a duct (404) connected to the injection nozzle (403) to feed the air flow to it, **characterized in that**, at the working position (P2), the bead seating device (4) is operatively constrained rigidly to the frame (100) and wherein the apparatus (1) comprises a locking device (405) configured to make the rigid element (401) of the bead seating device (4) become one with the frame (100) in its working position (P2), so that the bead seating device (4) remains independently and fixedly stationary at the position (P2), even when subjected to a force generated by the air flow.

2. The apparatus (1) according to claim 1, wherein the rigid element (401) of the bead seating device is slidable relative to the frame (100).

3. The apparatus (1) according to claim 2, comprising a supporting element which is movable relative to the frame (100) along an axial orientation (A), parallel to the axis of rotation (R1) and wherein the rigid element (401) of the bead seating device (4) is connected to the supporting element.

4. The apparatus (1) according to any one of the preceding claims, wherein the injection nozzle (403) comprises an abutment element (406) configured to come into abutment against the rim (C) of the wheel (R) when the bead seating device (4) is at the working position (P2).

5. The apparatus (1) according to any one of the preceding claims, wherein the rigid element (401) is elongate along the transverse orientation (T) and wherein the injection nozzle (403) is oriented along an injection plane (PI) that is inclined relative to the transverse orientation (T).

6. The apparatus (1) according to any one of the preceding claims, wherein the injection nozzle (403) is oriented along an injection plane (PI) and comprises a first opening (403A) and a second opening (403B) to produce a first air flow, directed along a first orientation (D1), and a second air flow, directed along a second orientation (D2), wherein the first orientation (D1) and the second orientation (D2) are contained in the injection plane (PI) and are inclined to each other.

7. The apparatus (1) according to any one of the preceding claims, wherein the rigid element (401) is movable translationally relative to the frame (100) along the transverse orientation (T).

8. The apparatus (1) according to any one of the preceding claims, wherein the rigid element (401) is oriented radially along an axis passing through the axis of rotation (R1).

9. The apparatus (1) according to any one of the preceding claims, comprising an actuator that is connected to the bead seating device (4) to move it between the rest position (P1) and the working position (P2), wherein the apparatus comprises a control unit, configured to:
- receive configuration data correlated with the diameter of the rim (C);
- generate drive signals representing the working position (P2) of the bead seating device (4) in response to the configuration data;
- send the drive signals to the actuator to instruct it to move the bead seating device (4) between the rest position (P1) and the working position (P2).

10. The apparatus (1) according to any one of the preceding claims, comprising an inflator that includes an inflation duct connectable to an inflation valve with which the rim (C) of the wheel (R) is provided, in order to inflate the tyre (P) mounted on the rim (C).

11. A method for mounting a tyre (P) on a respective rim (C) of a wheel (R) of a vehicle, comprising the following steps:
- providing a mounting apparatus (1) including a frame (100), a chuck (3) connected to the frame (100), a working tool (2) and a bead seating device (4);.
- positioning the tyre (P) on the rim (C) fixed to the chuck (3), moving the working tool (2) into contact with the tyre (P) and rotating the chuck (3) about the axis of rotation (R1) of the wheel (R) in order to couple the tyre (P) to the rim (C);
- moving the bead seating device (4) relative to the chuck (3) along a transverse orientation (T), perpendicular to the axis of rotation (R1), between a rest position (P1), in which the bead seating device (4) is spaced from the rim (C), and a working position (P2), in which the bead seating device (4) is interposed between the flange of the rim (C) and the bead of the tyre (P);
- seating the bead of the tyre (P) in the respective rim (C) by injecting an air flow between a flange of the rim (C) and a bead of the tyre (P), **characterized in that**, during the step of seating the bead, a rigid element (401) of the bead seating device (4) is constrained to the frame (100) and receives from the frame (100) a constraint force to oppose the force generated by the air flow so as to keep the bead seating device (4) stationary at the working position (P2) during the step of seating the bead. wherein the method comprises a step of locking in which, with the bead seating device (4) at the working position (P2), a locking element (405) rigidly constrains the rigid element (401) to the frame (100) so as to keep an injection nozzle (403) of the bead seating device (4) in a stationary position relative to the frame (100).

12. The method according to claim 11, comprising a step of actuating, in which an actuator moves the bead seating device (4) along the transverse orientation (T) between the rest position (P1) and the working position (P2).

13. The method according to claim 11 or 12, comprising a step of moving the bead seating device (4) along an axial orientation (A) parallel to the axis of rotation (R1).

14. The method according to any one of claims 11 to 13, wherein, in the step of seating the bead, an injection nozzle (403) is oriented along an injection plane (PI) and injects the air flow, and wherein, in the step of seating the bead, a first opening (403A) of the injection nozzle (403) injects a first air flow directed along a first orientation (D1) and a second opening (403B) of the injection nozzle (403) injects a second air flow, directed along a second orientation (D2) which is inclined to the first orientation (D1), the first orientation (D1) and the second orientation (D2) being contained in the injection plane (PI).

## Patentansprüche

1. Vorrichtung (1) zur Montage eines Reifens (P) auf einer jeweiligen Felge (C) eines Rades (R) eines Fahrzeugs, umfassend:
- einen Rahmen (100);
- ein Spannfutter (3), das mit dem Rahmen (100) verbunden ist, um sich um eine Drehachse (R1) zu drehen, und mit dem Rad (R) verbunden werden kann, um es in Drehung mitzunehmen;
- ein Arbeitswerkzeug (2), das relativ zu dem Rahmen (100) in Richtung auf das Rad (R) bewegbar ist, um mit dem Reifen (P) in Kontakt zu kommen;
- eine Wulstsitzeinrichtung (4), die ausgelegt ist, um einen Luftstrom zu erzeugen, der zwischen einem Flansch der Felge (C) und einem Wulst des Reifens (P) einzuspritzen ist, um den Reifen (P) auf der Felge (C) des Rades (R) zu setzen, wobei die Wulstsitzeinrichtung (4) relativ zu dem Spannfutter entlang einer Querausrichtung (T), die senkrecht zu der Drehachse (R1) ist, zwischen einer Ruheposition (P1), in der die Wulstsitzeinrichtung (4) von der Felge (C) beabstandet ist, und einer Arbeitsposition (P2), in der die Wulstsitzeinrichtung (4) zwischen der Flansch der Felge (C) und der Wulst des Reifens (P) angeordnet ist, bewegbar ist, wobei die Wulstsitzeinrichtung (4) einschließt: ein starres Element (401), eine Einspritzdüse (403), die mit dem starren Element (401) verbunden ist und ausgelegt ist, um zwischen dem Flansch der Felge (C) und dem Wulst des Reifens (P) angeordnet zu werden, wenn sich die Wulstsitzeinrichtung (4) in der Arbeitsposition (P2) befindet; und einen Kanal (404), der mit der Einspritzdüse (403) verbunden ist, um den Luftstrom zu ihr zuzuführen,
**dadurch gekennzeichnet, dass** die Wulstsitzeinrichtung (4) in der Arbeitsposition (P2) betriebswirksam starr an den Rahmen (100) festgespannt ist und wobei die Vorrichtung (1) eine Verriegelungseinrichtung (405) umfasst, die ausgelegt ist, um das starre Element (401) der Wulstsitzeinrichtung (4) mit dem Rahmen (100) in seiner Arbeitsposition (P2) eins werden zu lassen, so dass die Wulstsitzeinrichtung (4) unabhängig und fest an der Position (P2) stationär bleibt, auch wenn sie einer durch den Luftstrom erzeugten Kraft ausgesetzt ist.

2. Vorrichtung (1) nach Anspruch 1, wobei das starre Element (401) der Wulstsitzeinrichtung relativ zu dem Rahmen (100) verschiebbar ist.

3. Vorrichtung (1) nach Anspruch 2, umfassend ein Stützelement, das relativ zu dem Rahmen (100) entlang einer axialen Ausrichtung (A) parallel zu der Drehachse (R1) bewegbar ist, und wobei das starre Element (401) der Wulstsitzeinrichtung (4) mit dem Stützelement verbunden ist.

4. Vorrichtung (1) nach einem der vorhergehenden Ansprüche, wobei die Einspritzdüse (403) ein Anschlagelement (406) umfasst, das so ausgelegt ist, dass es an der Felge (C) des Rades (R) zur Anlage kommt, wenn sich die Wulstsitzeinrichtung (4) in der Arbeitsposition (P2) befindet.

5. Vorrichtung (1) nach einem der vorhergehenden Ansprüche, wobei das starre Element (401) entlang der Querausrichtung (T) länglich ist und wobei die Einspritzdüse (403) entlang einer Einspritzebene (PI) ausgerichtet ist, die relativ zu der Querausrichtung (T) geneigt ist.

6. Vorrichtung (1) nach einem der vorhergehenden Ansprüche, wobei die Einspritzdüse (403) entlang einer Einspritzebene (PI) ausgerichtet ist und eine erste Öffnung (403A) und eine zweite Öffnung (403B) umfasst, um einen ersten Luftstrom, der entlang einer ersten Ausrichtung (D1) gerichtet ist, und einen zweiten Luftstrom, der entlang einer zweiten Ausrichtung (D2) gerichtet ist, zu erzeugen, wobei die erste Ausrichtung (D1) und die zweite Ausrichtung (D2) in der Einspritzebene (PI) enthalten sind und zueinander geneigt sind.

7. Vorrichtung (1) nach einem der vorhergehenden Ansprüche, wobei das starre Element (401) relativ zu dem Rahmen (100) entlang der Querausrichtung (T) translatorisch bewegbar ist.

8. Vorrichtung (1) nach einem der vorhergehenden Ansprüche, wobei das starre Element (401) radial entlang einer Achse ausgerichtet ist, die durch die Drehachse (R1) verläuft.

9. Vorrichtung (1) nach einem der vorhergehenden Ansprüche, umfassend einen Stellantrieb, der mit der Wulstsitzeinrichtung (4) verbunden ist, um sie zwischen der Ruheposition (P1) und der Arbeitsposition (P2) zu bewegen,
wobei die Vorrichtung eine Steuereinheit umfasst, die ausgelegt ist, um:
- die Auslegungsdaten, die mit dem Durchmesser der Felge (C) korrelieren, zu empfangen;
- die Antriebssignalen, die die Arbeitsposition (P2) der Wulstsitzeinrichtung (4) als Reaktion auf die Auslegungsdaten darstellen, zu erzeugen;
- die Antriebssignale an den Stellantrieb zu senden, um ihn anzuweisen, die Wulstsitzeinrichtung (4) zwischen der Ruheposition (P1) und der Arbeitsposition (P2) zu bewegen.

10. Vorrichtung (1) nach einem der vorhergehenden Ansprüche, umfassend eine Aufblasvorrichtung, die einen Aufblaskanal einschließt, der mit einem Aufblasventil verbindbar ist, mit dem die Felge (C) des Rades (R) versehen ist, um den auf der Felge (C) montierten Reifen (P) aufzublasen.

11. Verfahren zur Montage eines Reifens (P) auf einer jeweiligen Felge (C) eines Rades (R) eines Fahrzeugs, umfassend die folgenden Schritte:
- Bereitstellen einer Montagevorrichtung (1) einschließend einen Rahmen (100), ein Spannfutter (3), das mit dem Rahmen (100) verbunden ist, ein Arbeitswerkzeug (2) und eine Wulstsitzeinrichtung (4);
- Positionieren des Reifens (P) auf der an dem Spannfutter (3) befestigten Felge (C), Bewegen des Arbeitswerkzeugs (2) in Kontakt mit dem Reifen (P) und Drehen des Spannfutters (3) um die Drehachse (R1) des Rads (R), um den Reifen (P) an die Felge (C) zu koppeln;
- Bewegen der Wulstsitzeinrichtung (4) relativ zum Spannfutter (3) entlang einer Querausrichtung (T), die senkrecht zur Drehachse (R1) ist, zwischen einer Ruheposition (P1), in der die Wulstsitzeinrichtung (4) von der Felge (C) beabstandet ist, und einer Arbeitsposition (P2), in der die Wulstsitzeinrichtung (4) zwischen dem Flansch der Felge (C) und dem Wulst des Reifens (P) angeordnet ist;
- Setzen des Wulstes des Reifens (P) in die jeweilige Felge (C) durch Einspritzen eines Luftstroms zwischen einen Flansch der Felge (C) und einen Wulst des Reifens (P),
**dadurch gekennzeichnet, dass** während des Schrittes zum Setzen des Wulstes ein starres Element (401) der Wulstsitzeinrichtung (4) an den Rahmen (100) festgespannt ist und von dem Rahmen (100) eine Beschränkungskraft empfängt, um der durch den Luftstrom erzeugten Kraft entgegenzuwirken, um die Wulstsitzeinrichtung (4) während des Schrittes zum Setzen des Wulstes in der Arbeitsposition (P2) stationär zu halten,
wobei das Verfahren einen Schritt zum Verriegeln umfasst, wobei bei der Wulstsitzeinrichtung (4) in der Arbeitsposition (P2) ein Verriegelungselement (405) das starre Element (401) starr an dem Rahmen (100) festspannt, um eine Einspritzdüse (403) der Wulstsitzeinrichtung (4) in einer stationären Position relativ zu dem Rahmen (100) zu halten.

12. Verfahren nach Anspruch 11, umfassend einen Schritt zum Betätigen, wobei ein Stellantrieb die Wulstsitzeinrichtung (4) entlang der Querausrichtung (T) zwischen der Ruheposition (P1) und der Arbeitsposition (P2) bewegt.

13. Verfahren nach Anspruch 11 oder 12, umfassend einen Schritt zum Bewegen der Wulstsitzeinrichtung (4) entlang einer axialen Ausrichtung (A) parallel zur Drehachse (R1) .

14. Verfahren nach einem der Ansprüche 11 bis 13, wobei im Schritt zum Setzen des Wulstes eine Einspritzdüse (403) entlang einer Einspritzebene (PI) ausgerichtet ist und den Luftstrom einspritzt, und wobei im Schritt zum Setzen des Wulstes eine erste Öffnung (403A) der Einspritzdüse (403) einen ersten Luftstrom einspritzt, der entlang einer ersten Ausrichtung (D1) gerichtet ist, und eine zweite Öffnung (403B) der Einspritzdüse (403) einen zweiten Luftstrom einspritzt, der entlang einer zweiten Ausrichtung (D2) gerichtet ist, die zu der ersten Ausrichtung (D1) geneigt ist, wobei die erste Ausrichtung (D1) und die zweite Ausrichtung (D2) in der Einspritzebene (PI) enthalten sind.

## Revendications

1. Appareil (1) de montage d'un pneu (P) sur une jante respective (C) d'une roue (R) d'un véhicule, comprenant :
- un châssis (100) ;
- un mandrin (3), relié au châssis (100) pour tourner autour d'un axe de rotation (R1) et pouvant être relié à la roue (R) pour l'entraîner en rotation ;
- un outil de travail (2) étant mobile par rapport au châssis (100) vers la roue (R) pour se mettre au contact du pneu (P) ;
- un dispositif de repos de talon (4) configuré pour générer un flux d'air à injecter entre une bride de la jante (C) et un talon du pneu (P) afin de reposer le pneu (P) sur la jante (C) de la roue (R), le dispositif de repos de talon (4) étant mobile par rapport au mandrin le long d'une orientation transversale (T), perpendiculaire à l'axe de rotation (R1), entre une position de repos (P1), dans laquelle le dispositif de repos de talon (4) est espacé de la jante (C), et une position de travail (P2), dans laquelle le dispositif de repos de talon (4) est interposé entre la bride de la jante (C) et le talon du pneu (P), le dispositif de repos de talon (4) incluant : un élément rigide (401), une buse d'injection (403) reliée à l'élément rigide (401) et configurée pour être interposée entre la bride de la jante (C) et le talon du pneu (P) lorsque le dispositif de repos de talon (4) se trouve en position de travail (P2) ; et un conduit (404) relié à la buse d'injection (403) pour lui fournir le flux d'air,
**caractérisé en ce que**, dans la position de travail (P2), le dispositif de repos de talon (4) est fonctionnellement solidaire de manière rigide au châssis (100) et dans lequel l'appareil (1) comprend un dispositif de verrouillage (405) configuré pour que l'élément rigide (401) du dispositif de repos de talon (4) ne fasse plus qu'un avec le châssis (100) dans sa position de travail (P2), de sorte que le dispositif de repos de talon (4) reste indépendamment et fixement stationnaire en position (P2), même lorsqu'il est soumis à une force générée par le flux d'air.

2. Appareil (1) selon la revendication 1, dans lequel l'élément rigide (401) du dispositif de repos de talon est coulissant par rapport au châssis (100).

3. Appareil (1) selon la revendication 2, comprenant un élément de support étant mobile par rapport au châssis (100) le long d'une orientation axiale (A), parallèle à l'axe de rotation (R1) et dans lequel l'élément rigide (401) du dispositif de repos de talon (4) est relié à l'élément de support.

4. Appareil (1) selon l'une quelconque des revendications précédentes, dans lequel la buse d'injection (403) comprend un élément de butée (406) configuré pour venir se mettre en butée contre la jante (C) de la roue (R) lorsque le dispositif de repos de talon (4) est en position de travail (P2).

5. Dispositif (1) selon l'une quelconque des revendications précédentes, dans lequel l'élément rigide (401) est allongé le long de l'orientation transversale (T) et dans lequel la buse d'injection (403) est orientée le long d'un plan d'injection (PI) étant incliné par rapport à l'orientation transversale (T).

6. Appareil (1) selon l'une quelconque des revendications précédentes, dans lequel la buse d'injection (403) est orientée le long d'un plan d'injection (PI) et comprend une première ouverture (403A) et une deuxième ouverture (403B) pour produire un premier flux d'air, dirigé le long d'une première orientation (D1), et un deuxième flux d'air, dirigé le long d'une deuxième orientation (D2), dans lequel la première orientation (D1) et la deuxième orientation (D2) sont contenues dans le plan d'injection (PI) et sont inclinées l'une par rapport à l'autre.

7. Dispositif (1) selon l'une quelconque des revendications précédentes, dans lequel l'élément rigide (401) est mobile en translation par rapport au châssis (100) le long de l'orientation transversale (T).

8. Appareil (1) selon l'une quelconque des revendications précédentes, dans lequel l'élément rigide (401) est orienté radialement le long d'un axe passant par l'axe de rotation (R1).

9. Appareil (1) selon l'une quelconque des revendications précédentes, comprenant un actionneur étant relié au dispositif de repos de talon (4) pour le déplacer entre la position de repos (P1) et la position de travail (P2),
dans lequel l'appareil comprend une unité de commande configurée pour :
- recevoir des données de configuration corrélées au diamètre de la jante (C) ;
- générer des signaux d'entraînement représentant la position de travail (P2) du dispositif de repos de talon (4) en réponse aux données de configuration ;
- envoyer les signaux d'entraînement à l'actionneur pour lui donner l'ordre de déplacer le dispositif de repos de talon (4) entre la position de repos (P1) et la position de travail (P2).

10. Appareil (1) selon l'une quelconque des revendications précédentes, comprenant un gonfleur qui comprend un conduit de gonflage pouvant être raccordé à une valve de gonflage dont est pourvue la jante (C) de la roue (R), afin de gonfler le pneu (P) monté sur la jante (C).

11. Procédé de montage d'un pneu (P) sur une jante respective (C) d'une roue (R) d'un véhicule, comprenant les étapes suivantes :
- fournir un appareil de montage (1) incluant un châssis (100), un mandrin (3) relié au châssis (100), un outil de travail (2) et un dispositif de repos de talon (4) ;
- positionner le pneu (P) sur la jante (C) fixée au mandrin (3), déplacer l'outil de travail (2) pour le mettre au contact du pneu (P) et faire tourner le mandrin (3) autour de l'axe de rotation (R1) de la roue (R) afin d'accoupler le pneu (P) à la jante (C) ;
- déplacer le dispositif de repos de talon (4) par rapport au mandrin (3) le long d'une orientation transversale (T), perpendiculaire à l'axe de rotation (R1), entre une position de repos (P1), dans laquelle le dispositif de repos de talon (4) est espacé de la jante (C), et une position de travail (P2), dans laquelle le dispositif de repos de talon (4) est interposé entre la bride de la jante (C) et le talon du pneu (P) ;
- reposer le talon du pneu (P) sur la jante respective (C) en injectant un flux d'air entre une bride de la jante (C) et un talon du pneu (P),
**caractérisé en ce que**, pendant l'étape consistant à reposer le talon, un élément rigide (401) du dispositif de repos de talon (4) est solidaire du châssis (100) et reçoit du châssis (100) une force de contrainte pour s'opposer à la force générée par le flux d'air de manière à maintenir le dispositif de repos de talon (4) stationnaire en position de travail (P2) pendant l'étape consistant à reposer le talon,
dans lequel le procédé comprend une étape de verrouillage dans laquelle, avec le dispositif de repos de talon (4) en position de travail (P2), un élément de verrouillage (405) fixe de manière rigide l'élément rigide (401) au châssis (100) de manière à maintenir une buse d'injection (403) du dispositif de repos de talon (4) dans une position stationnaire par rapport au châssis (100).

12. Procédé selon la revendication 11, comprenant une étape d'actionnement, dans laquelle un actionneur déplace le dispositif de repos de talon (4) le long de l'orientation transversale (T) entre la position de repos (P1) et la position de travail (P2).

13. Procédé selon la revendication 11 ou 12, comprenant une étape de déplacement du dispositif de repos de talon (4) le long d'une orientation axiale (A) parallèle à l'axe de rotation (R1).

14. Procédé selon l'une quelconque des revendications 11 à 13, dans lequel, lors de l'étape consistant à reposer le talon, une buse d'injection (403) est orientée selon un plan d'injection (PI) et injecte le flux d'air, et dans lequel, lors de l'étape consistant à reposer le talon, une première ouverture (403A) de la buse d'injection (403) injecte un premier flux d'air, dirigé le long d'une première orientation (D1), et une deuxième ouverture (403B) de la buse d'injection (403) injecte un deuxième flux d'air, dirigé le long d'une deuxième orientation (D2) étant inclinée par rapport à la première orientation (D1), la première orientation (D1) et la deuxième orientation (D2) étant contenues dans le plan d'injection (PI) .
